# EUROPÄISCHE PATENTANMELDUNG

(11) **EP 3 246 677 A2**
(43) Veröffentlichungstag der Anmeldung: **22.11.2017**
(21) Anmeldenummer: 17171896.8
(22) Anmeldetag: 19.05.2017
(51) Int. Cl.: G01J 3/50, G01J 3/52, G01N 21/47, G01J 3/02, G06K 9/00

(54) **VERFAHREN UND VORRICHTUNG ZUR ERMITTLUNG ZUMINDEST EINER PRÜFEIGENSCHAFT EINES PRÜFGEGENSTANDS**

(30) Priorität: 19.05.2016 AT 504622016
(71) Anmelder: H & P Trading GmbH, 7531 Kemeten (AT)
(72) Erfinder: Hochwarter, Erwin, 7531 Kemeten (AT); Hochwarter, Michael, 7531 Kemeten (AT); Hochwarter, Markus, 7531 Kemeten (AT); Größwang, Heinz, 2531 Gaaden (AT)
(74) Vertreter: Patentanwälte Pinter & Weiss OG

(57) **Zusammenfassung**

Die Erfindung betrifft ein Verfahren zur Ermittlung zumindest einer Prüfeigenschaft eines Prüfgegenstands und eine Messvorrichtung, welche geeignet ist, ein Messfeld (3) unter einer Vielzahl an Anstrahlungskombinationen aus Einstrahlungswinkel (α) und/oder Wellenlängenbereich (A) mit elektromagnetischer Strahlung (5) anzustrahlen und die Intensität der jeweils von dem Messfeld unter zumindest einem Abstrahlungswinkel (β) remittierten elektromagnetischen Strahlung (5) zu messen. Die Prüfeigenschaft weist zumindest ein definiertes messbares Einzelmerkmal auf, wobei das Einzelmerkmal oder eine definierte Merkmalskombination mehrerer solcher Einzelmerkmale die Herkunft und/oder Identität des Prüfgegenstandes (1) belegt, wobei das Einzelmerkmal oder die Merkmalskombination messbar ist, wenn sie durch die elektromagnetische Strahlung (5) auf eine durch eine Auswahl an Anstrahlungkombinationen definierte Art und Weise optisch angeregt wird. Das Einzelmerkmal oder die Merkmalskombination wird mit der Messvorrichtung (4) in dieser Art und Weise angeregt und gemessen.

## Beschreibung

Die Erfindung betrifft ein Verfahren zur Ermittlung zumindest einer Prüfeigenschaft eines Prüfgegenstands, wobei eine Probenoberfläche des Prüfgegenstands an einem Messfeld einer Messvorrichtung angeordnet wird, welche geeignet ist, das Messfeld unter einer Vielzahl an Anstrahlungskombinationen aus Einstrahlungswinkel und/oder Wellenlängenbereich mit elektromagnetischer Strahlung anzustrahlen und die Intensität von jeweils von dem Messfeld unter zumindest einem Abstrahlungswinkel remittierter elektromagnetischer Strahlung zu messen. Weiters betrifft die Erfindung eine Messvorrichtung, insbesondere zur Ausführung dieses Verfahrens, mit einem lichtabdichtenden Gehäuse, wobei das Gehäuse eine Messöffnung aufweist, welche bei der Messung an eine Probenoberfläche eines Prüfgegenstands angehalten wird und auf dieser ein Messfeld in einer Prüfebene definiert, zumindest einem Strahlungsgeber, der elektromagnetische Strahlung in einem definierten Wellenlängenbereich über einen Strahlengang unter einem definierten Einstrahlungswinkel auf das Messfeld richtet, und zumindest einer ersten Messzelle zur Messung der Intensität von unter einem Abstrahlungswinkel von dem Messfeld remittierter elektromagnetischer Strahlung.

Ähnliche Verfahren und Vorrichtungen werden derzeit verwendet, um die Farbe einer Oberfläche zu ermitteln, beispielsweise im Zuge der Qualitätsprüfung von Druck- oder Lackierarbeiten.

Im Stand der Technik bekannte Vorrichtungen sind jedoch im Allgemeinen entweder sperrig und unhandlich, oder sie weisen hinsichtlich ihrer Messgenauigkeit nur eine eingeschränkte Funktionalität auf, was deren Einsatzfähigkeit beeinträchtigt.

EP0319769B1 offenbart einen Sensorkopf zur Farbmessung, wobei eine Messfläche mit unterschiedlichen Dioden jeweils mit Licht in einem bestimmten schmalbandigen Wellenlängenbereich angestrahlt, und das jeweils reflektierte Licht gemessen und die Messergebnisse für die Farbbestimmung ausgewertet werden.

Die DE 4434168 B4 offenbart eine Vorrichtung zur Messung und Auswertung von Farbeigenschaften.

Der Erfindung liegt die Idee zugrunde, Vorrichtungen und Verfahren bereitzustellen, die es erlauben, die Herkunft von Produkten und Gegenständen mit einer leichten und standortungebundenen Messvorrichtung überprüfen zu können. Dabei soll in Form eines Schnelltests ermittelt werden, ob der jeweils geprüfte Prüfgegenstand die Prüfeigenschaft aufweist oder nicht.

Erfindungsgemäß werden dieses und weitere Ziele mittels eines eingangs genannten Verfahrens erzielt, bei dem die Prüfeigenschaft zumindest ein definiertes messbares Einzelmerkmal aufweist, wobei das Einzelmerkmal oder eine definierte Merkmalskombination mehrerer solcher Einzelmerkmale die Herkunft und/oder Identität des Prüfgegenstandes belegt, wobei das Einzelmerkmal oder die Merkmalskombination messbar ist, wenn sie durch die elektromagnetische Strahlung auf eine durch eine Auswahl an Anstrahlungkombinationen definierte Art und Weise optisch angeregt wird, und wobei das Einzelmerkmal oder die Merkmalskombination mit der Messvorrichtung in dieser Art und Weise angeregt und gemessen wird.

In einer vorteilhaften Ausführungsform führt das Verfahren erfindungsgemäß die folgenden Schritte aus: Ausführen einer für die zu messende Prüfeigenschaft des Prüfgegenstandes definierten Abfolge von Einzelmessungen für jedes Einzelmerkmal, wobei jede Einzelmessung zumindest ein Anstrahlen der Probenoberfläche im Messfeld mit elektromagnetischer Strahlung unter einem definierten Einstrahlungswinkel und einem definierten Wellenlängenbereich und ein Messen der von der Probenoberfläche unter zumindest einem definierten Abstrahlungswinkel remittierten elektromagnetischen Strahlung umfasst; Vergleichen der Messwerte mit für die Abfolge von Einzelmessungen definierten Referenzbereichen; und Ermitteln, dass der Prüfgegenstand die Prüfeigenschaft aufweist, wenn eine vorbestimmte Teilmenge der Messwerte innerhalb der definierten Referenzbereiche liegen oder Ermitteln, dass der Prüfgegenstand die Prüfeigenschaft nicht aufweist, wenn eine vorbestimmte Teilmenge der Messwerte außerhalb der definierten Referenzbereiche liegen. Die damit erzielte Verknüpfung von Messverfahren und Prüfeigenschaft bewirkt, dass die Prüfeigenschaft nur überprüft werden kann, wenn auch das entsprechende Messverfahren bekannt ist. Für einen Produktfälscher, der beispielsweise lediglich die Gestaltung und die Farben einer Verpackung exakt kopiert, ist es nicht möglich, das gefälschte Produkt auch mit der Prüfeigenschaft zu versehen, wenn er keine genauen Kenntnisse über das Messverfahren und die Merkmalskombination hat. Diese Sicherheit kann durch verschiedene weitere Ausgestaltungsmerkmale noch erheblich erhöht werden.

In vorteilhafter Weise kann etwa zumindest ein Einzelmerkmal von der Farbe der Probenoberfläche zumindest teilweise unabhängig sein. Dadurch wird bei einem Nacharbeiten der Farbe die Merkmalskombination, die die Prüfeigenschaft definiert, nicht vollständig "mitkopiert". Der Begriff "zumindest teilweise von der Farbe unabhängig" bedeutet, dass zumindest einzelne Aspekte des Einzelmerkmals mit einer herkömmlichen Farbmessung nicht messbar sind.

So kann etwa, in einer weiteren vorteilhaften Ausführungsform, zumindest ein Einzelmerkmal durch eine dem Prüfungsgegenstand zugemischte Materialkomponente bestimmt sein, die vorzugsweise die sichtbare Farbe der Probenoberfläche nicht wahrnehmbar verändert. Es sind beispielsweise Materialkomponenten bekannt, die bestimmte Reflexionspeaks, die in einem genau definierten Wellenlängenbereich am Rande oder außerhalb des sichtbaren Spektrums auftreten und/oder nur unter einer bestimmten Winkelkombination messbar sind "auslöschen", ohne dass sich dabei die Farbe der Probenoberfläche wesentlich ändert. Das dadurch definierte Einzelmerkmal ist nur messbar, wenn man über genaue Kenntnisse der verwendeten Materialkomponente und/oder der anzuwendenden Einzelmessung verfügt. Solche Materialkomponenten können als eine Art "optischer Marker" betrachtet werden.

Zumindest ein Einzelmerkmal kann somit eine winkelabhängige optische Eigenschaft der Probenoberfläche umfassen.

In einer weiteren vorteilhaften Ausführungsform kann zumindest ein Einzelmerkmal zumindest ein Abklingverhalten einer von der elektromagnetischen Strahlung bewirkten Fluoreszenz des Prüfgegenstandes umfassen. Dabei kann der Wellenlängenbereich der Anregung, der Wellenlängenbereich der Fluoreszenz und der Verlauf des Abklingverhaltens bezogen auf die jeweilige Anregung als Merkmalskombination genutzt werden, wobei es wiederum nicht möglich ist, den Prüfgegenstand zu fälschen, ohne exakte Kenntnisse von jeweiligen Merkmalskombination zu haben. Durch die Auswertung der Fluoreszenz lassen sich komplexe Verfahren zur Echtheitsbestimmung realisieren und es können auch bestimmte Stoffeigenschaften überprüft werden, beispielsweise zur Erkennung seltener Erden. Durch eine gezielte Reihenfolge der Anstrahlungskombinationen können auch sich überschneidende Effekte, beispielsweise Kombinationen mehrerer Abklingverhalten, angeregt, gemessen und ausgewertet werden.

In noch einer weiteren vorteilhaften Ausführungsform kann zumindest ein Einzelmerkmal durch eine im Prüfungsgegenstand notwendiger Weise vorhandene Substanz, insbesondere eine pharmazeutische Wirksubstanz, bestimmt sein. Zahlreiche Wirksubstanzen in Medikamenten haben im oder außerhalb des sichtbaren Wellenlängenspektrums Auswirkungen auf das optische Verhalten der Oberfläche. Wenn diese Auswirkungen als Einzelmerkmal in die Merkmalskombination integriert werden, ist es praktisch unmöglich, den Prüfgegenstand, also etwa ein Medikament, zu fälschen, ohne zumindest den eigentlichen Wirkstoff im Medikament zu verwenden. Somit ermöglicht das erfindungsgemäße Verfahren eine Stoffbestimmung und Echtheitsmessung, wobei auch eine quantitative Materialanalyse realisierbar ist, etwa um zu ermitteln, ob ein chemischer Stoff in einem Medikament in ausreichender Menge vorhanden ist. Die für bestimmte Stoffe jeweils verwendbaren Einzelmerkmale bzw. Merkmalskombinationen können von einem Fachmann, der Kenntnisse von den hierin offenbarten Lehren hat, durch standardmäßige und übliche Versuche ermittelt werden.

In vorteilhafter Weise kann erfindungsgemäß zumindest eine Einzelmessung einen Wellenlängenbereich im nicht sichtbaren Lichtspektrum nutzen, wodurch das Auffinden, Erzeugen und Verwenden von Einzelmerkmalen, die von der Farbe der Probenoberfläche unabhängig sind, vereinfacht wird.

In einer weiteren vorteilhaften Ausführungsform kann während zumindest einer Einzelmessung die von der Probenoberfläche remittierte elektromagnetische Strahlung unter zumindest zwei unterschiedlichen Abstrahlungswinkeln gemessen werden. Eine solche gleichzeitige Messung eines Remissionsverhaltens unter mehreren Winkeln erlaubt ein schnelles und detailliertes Erkennen winkelabhängiger Einzelmerkmale. Dabei kann die Probenoberfläche auch mit mehreren Strahlungsgebern gleichzeitig angeregt und die remittierte elektromagnetische Strahlung mit mehreren, gegebenenfalls an mehreren unterschiedlichen Empfangspositionen angeordneten schmalbandigen Messzellen gemessen werden.

Die für den Prüfgegenstand definierte Abfolge von Einzelmessungen und/oder Referenzbereichen kann in vorteilhafter Weise in der Messvorrichtung gegen ein Auslesen gesichert, insbesondere datentechnisch oder hardwaretechnisch verschlüsselt gespeichert sein. Diese Sicherung verhindert oder verzögert eine Auswertung der von einer Messvorrichtung auswertbaren Merkmalskombinationen, etwa im Zuge eines "reverse engineering". Die Sicherung kann beispielsweise softwaretechnisch oder hardwaretechnisch umgesetzt sein. Eine softwaretechnische Lösung hat den Vorteil, dass jede Messvorrichtung durch Softwareaktualisierungen einfach auf den neuesten Stand gebracht werden kann, eine hardwaretechnische Umsetzung, etwa durch ein entsprechendes Chipdesign, hat hingegen den Vorteil, dass es das Auslesen und Analysieren der Sicherheitsmechanismen erheblich erschwert. In vorteilhafter Weise können diese Daten und/oder weitere Daten, die das Messverfahren betreffen, vor jedem Prüfvorgang über eine Fernabfrage online abgerufen werden.

In einer vorteilhaften Ausführungsform kann die für die Einzelmessung ausgestrahlte elektromagnetische Strahlung gleichzeitig auf eine in der Messvorrichtung angeordneten Referenzfläche gerichtet, und von dieser Referenzfläche remittierte elektromagnetische Strahlung mit einer zweiten Messzelle gemessen und der eigentliche Messwert mithilfe dieser zweiten Messung kalibriert werden. Eine solche integrierte Kalibrierung erweitert den Einsatzbereich des Verfahrens, da es eine erhebliche Verkleinerung und Vereinfachung der erforderlichen Messvorrichtung erlaubt. Toleranzabweichungen insbesondere der Intensitätswerte von Leuchtdioden, aber auch deren Wellenlängendrift können ohne Benutzereingriff automatisch ausgeglichen werden.

Das erfindungsgemäße Verfahren kann an sich mit den bekannten komplexen Messvorrichtungen ausgeführt werden, sofern sie für diesen Zweck geeignet sind, erfindungsgemäß ist es jedoch besonders vorteilhaft, das Verfahren auch mit mobilen, einfachen Messvorrichtungen ausführen zu können. Um das erfindungsgemäße Verfahren in vorteilhafter Weise in die Praxis umsetzen zu können, umfasst die Erfindung somit weiters eine Messvorrichtung der eingangs genannten Art, wobei die Messvorrichtung in vorteilhafter Weise zumindest einen Sekundärgang aufweist, über den von dem Strahlungsgeber abgegebene elektromagnetische Strahlung gleichzeitig auf eine Referenzfläche gerichtet wird, wobei eine zweite Messzelle vorgesehen ist, die von der Referenzfläche remittierte elektromagnetische Strahlung misst. Dadurch kann bei jedem Messvorgang und gegebenenfalls bei jeder Einzelmessung eine automatische Kalibrierung der Strahlungsgeber durchgeführt werden. Dies erlaubt eine Verkleinerung und Vereinfachung der erforderlichen Messvorrichtung, sodass diese etwa auch als von Hand tragbarer Schnelltester konzipiert werden kann. Solche "Handheld"-Geräte können dann auch für Stichprobenkontrollen an unterschiedlichen Orten, etwa in Lagern, Werkstätten oder in Geschäften des Einzelhandels verwendet werden, sodass die Einsatzmöglichkeiten des erfindungsgemäßen Verfahrens wesentlich erweitert werden.

Um die Messgenauigkeit weiter zu erhöhen kann erfindungsgemäß zumindest ein Konditionierelement, insbesondere ein Peltierelement, zur Konditionierung der Betriebstemperatur von zumindest einem Strahlungsgeber vorgesehen sein. Dadurch lassen sich temperaturbedingte Toleranzabweichungen der Intensität und der Wellenlänge des Strahlungsgebers so weit minimieren, dass sie mittels der integrierten Kalibrierung für die Messzwecke ausreichend gut ausgeglichen werden können. Weiters erlaubt die Konditionierung den Einsatz kostengünstigerer LEDs als Strahlungsgeber.

In vorteilhafter Weise kann eine Vielzahl an Strahlungsgebern in zumindest einer ersten Emissionsebene angeordnet sein, wodurch eine konstruktiv einfache Messvorrichtung herstellbar ist.

Um die Anzahl an Strahlungsgebern und/oder die Vielfalt an Einstrahlungswinkeln und/oder Wellenlängenbereichen in einer konstruktiv einfachen Weise weiter zu erhöhen, kann eine Vielzahl weiterer Strahlungsgeber in einer zweiten Emissionsebene und gegebenenfalls in noch weiteren Emissionsebenen angeordnet sein.

In einer weiteren vorteilhaften Ausgestaltung der Erfindung kann in zumindest einer der Emissionsebenen zumindest eine Zusatzmesszelle angeordnet sein. Durch das Anordnen von Zusatzmesszellen in den Emissionsebenen lässt sich die Anzahl an messbaren Winkelkombinationen aus Einstrahlungs- und Abstrahlungswinkeln nahezu beliebig erhöhen.

In einer weiteren vorteilhaften Ausführungsform kann die Messvorrichtung eine Steuerungselektronik aufweist, die ausgebildet ist, um zumindest einen Teil der in der Messvorrichtung vorgesehenen Strahlungsgeber gemäß einer für eine zu messende Prüfeigenschaft des Prüfgegenstandes definierte Abfolge von Messungen selektiv zu aktivieren und remittierte elektrische Strahlung mit zumindest einem Teil der ersten Messzelle und gegebenenfalls der Zusatzmesszellen gemäß der definierten Abfolge von Messungen zu messen. Das erlaubt die Herstellung der Messvorrichtung als autarkes Gerät, das ohne zusätzliche Komponenten verwendbar ist.

Dabei kann die Steuerungselektronik in einer weiteren vorteilhaften Ausführungsform der Erfindung ausgebildet sein, um zu ermitteln, ob eine vorbestimmte Teilmenge der Messwerte der Abfolge von Messungen innerhalb von definierten Referenzbereichen liegt.

In vorteilhafter Weise kann die Steuerungselektronik eine Benutzerschnittstelle zum Anzeigen eines Prüfergebnisses aufweisen, wobei die Benutzerschnittstelle beispielsweise eine Display zur optischen Anzeige und/oder einen Signalgeber zur akustischen Anzeige des Prüfergebnisses aufweisen kann. Um zu verhindern, dass aus der Anzeige auf die jeweilige Merkmalskombination rückgeschlossen werden kann, wird vorzugsweise das Ergebnis als Pass/Fail-Entscheidung (d.h. entweder "Test bestanden" oder "Test nicht bestanden") ausgegeben. Schnelltester, die zur Prüfung mehrerer unterschiedlicher Merkmalskombinationen ausgebildet sind, können eine Menüführung zur Auswahl des zu testenden Produkts aufweisen. Selbstverständlich könnte die Messvorrichtung auch mit komplexeren Anzeigen und Menüstrukturen ausgestattet werden, für die Verwendung als Schnelltester ist jedoch eine möglichst weitgehende Vereinfachung der Funktion und Handhabung bevorzugt.

In einer weiteren vorteilhaften Ausführungsform kann die Steuerungselektronik ein Sicherheitsmodul aufweisen, in dem sensible Daten hardware- oder softwaretechnisch gegen ein Auslesen besonders geschützt sind. Sensible Daten können beispielsweise die Prüfeigenschaften, die Einzelmerkmale, die Merkmalskombinationen und/oder die Art und Weise der optischen Anregung und/oder Messung umfassen. Dies verhindert, dass aus der Messvorrichtung Informationen extrahiert werden können, die zur Produktfälschung bzw. zum Nacharbeiten von Sicherheitsmerkmalen verwendet werden könnten.

Die in der Vorrichtung gespeicherten Verfahrens- und/oder Parameterdaten können gegebenenfalls durch eine Onlineaktualisierung und/oder ein Firmwareupdate aktualisierbar sein.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 einen Querschnitt durch eine erfindungsgemäße Messvorrichtung quer zur Prüfebene;
Fig. 2 eine schematische Darstellung einer alternativen Anordnung von Strahlungsgebern und Messzellen in einer Schnittansicht quer zur Prüfebene bzw. zu den Emissionsebenen;
Fig. 3 eine schematische Darstellung der Anordnung der Fig. 2 in einer Ansicht normal zur Prüfebene bzw. zu den Emissionsebenen; und
Fig. 4 ein Beispiel für eine von der Wellenlänge abhängige Intensitätsverteilung eines Interferenzpigments gemessen unter einer bestimmten Winkelkombination.

Elemente, die in einzelnen Figuren mehrfach vorkommen, wurden dem Verständnis und der Übersichtlichkeit halber nicht mit eigenen Bezugszeichen versehen, sondern die entsprechenden Bezugszeichen sind zur Unterscheidung der einzelnen Teile jeweils mit Kleinbuchstaben ergänzt.

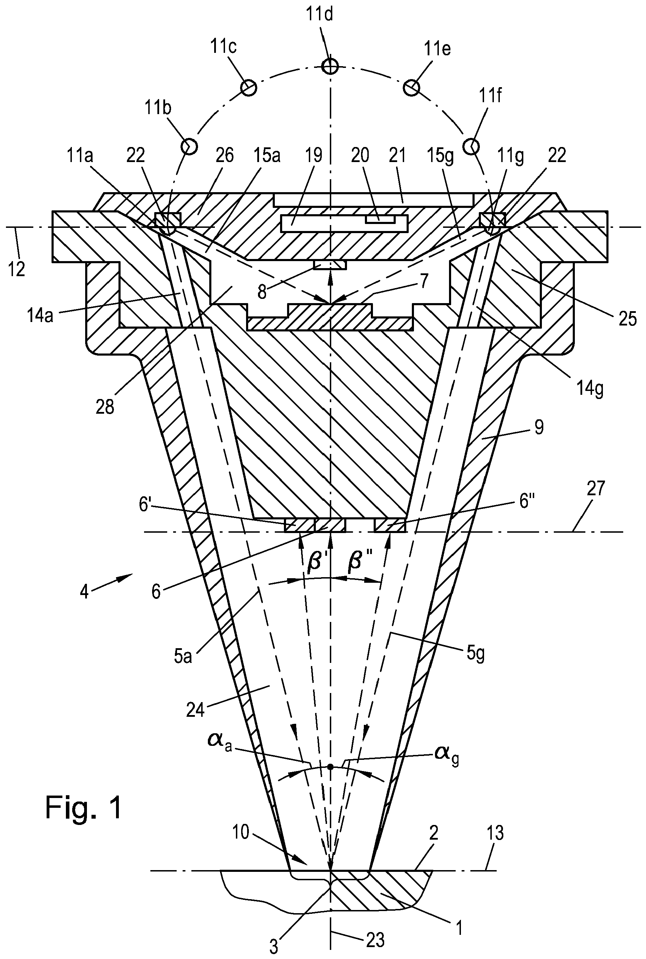

Fig. 1 zeigt eine Messvorrichtung 4 in einer Querschnittsansicht entlang einer Hauptachse 23. Die Messvorrichtung 4 weist ein konisches, lichtdichtes Gehäuse 9 auf, in dessen oberen, breiteren Teil die Messelektronik untergebracht ist, und deren spitzes unteres Ende eine Messöffnung 10 aufweist, mit der die Messvorrichtung 4 bei der Verwendung an eine Probenoberfläche 2 eines Prüfgegenstands 1 angesetzt wird. Durch das Ansetzten der Messvorrichtung 4 an die Probenoberfläche 2 wird der innere Hohlraum 24 der Messvorrichtung 4 lichtdicht abgeschlossen. Die Messöffnung 10 definiert auf der Probenoberfläche 2 ein Messfeld 3, das in einer Prüfebene 13 angeordnet ist.

Die Messelektronik ist teilweise in einem Gehäuseeinsatz 25 und einem Gehäusedeckel 26 untergebracht, die mit dem Gehäuse 9 fix oder lösbar verbunden sind. An der nach Innen hin gerichteten Oberfläche des Gehäusedeckels 26 sind eine Vielzahl an Strahlungsgebern 11 angeordnet, wobei von der beispielhaft dargestellten Anzahl an zwölf Strahlungsgebern nur die Strahlungsgeber 11a und 11g in der Schnittebene liegen, und die restlichen Strahlungsgeber 11b-1f und 11h-11l um die Hauptachse 23 herum kreisförmig angeordnet sind. Die Strahlungsgeber 11b -11f sind in die Zeichenebene gedreht in Fig. 1 schematisch dargestellt.

Die in Fig. 1 dargestellte Anzahl von zwölf Strahlungsgebern dient rein der beispielhaften Erläuterung der Erfindung. Aufgrund der Eigenschaften der als Strahlungsgeber im Allgemeinen verwendeten LEDs wird im Allgemeinen die Anzahl an Strahlungsgebern vom jeweiligen Zweck abhängig sein. Um beispielsweise den sichtbaren Lichtbereich der elektromagnetischen Strahlung (ca. 400 - 700 nm) abzudecken, konnten in Versuchen beispielsweise mit 16 schmalbandige LEDs bereits eine gute Messqualität erzielt werden. Als "schmalbandig" wird in diesem Zusammenhang eine LED angesehen, die elektromagnetische Strahlung mit Wellenlängen λ in einem Bereich von 40 nm Breite oder weniger erzeugt. In vom Anmelder durchgeführten Versuchen konnte mit einer Messvorrichtung mit 24 in einer Emissionsebene angeordneten Strahlungsgebern eine gute Abstimmung von technischem Aufwand und Messleistung gefunden werden, wobei auch Wellenlängenbereiche im unsichtbaren IR- und UV-Bereich berücksichtigt werden konnten.

Alle Strahlungsgeber 11 sind in einer ersten Emissionsebene 12 angeordnet, die eine definierte Entfernung zur Prüfebene 13 aufweist. Im Bereich jedes Strahlungsgebers 11 ist in dem Gehäuseeinsatz 25 ein Strahlengang 14 vorgesehen, der beispielsweise als Bohrung oder Durchlass ausgeführt sein kann. Jeder Strahlengang 14 ermöglicht es dem entsprechenden Strahlungsgeber 11, die von ihm abgegebene elektromagnetische Strahlung 5 unter einem bestimmten Einstrahlungswinkel α auf das Messfeld 3 zu richten. In Fig. 1 trifft die vom Strahlungsgeber 11a erzeugte elektromagnetische Strahlung 5a unter einem Winkel αₐ auf das Messfeld 3 auf und die vom Strahlungsgeber 11 g erzeugte elektromagnetische Strahlung 5g trifft unter einem Winkel α_{g} auf das Messfeld 3 auf. Aufgrund der drehsymmetrischen Anordnung der Strahlungsgeber 11 sind die beiden Winkel αₐ und α_{g} dem Betrag nach gleich, sie unterscheiden sich jedoch hinsichtlich ihrer räumlichen Anordnung. In anderen Ausführungsformen können sich die Einstrahlungswinkel der einzelnen Strahlungsgeber sich auch hinsichtlich ihres Betrags unterscheiden.

Um auf einfache Weise mehrere unterschiedliche Einstrahlungswinkel auswerten zu können, könnte die Prüfebene 13 unter einem Winkel zur Hauptachse 23 angeordnet werden, etwa indem die Messöffnung 10 demgemäß gestaltet wird.

An der Hauptachse 23 ist in einem mittleren Bereich des Hohlraums 24, d.h. in einer Messebene 27, die zwischen der ersten Emissionsebene 12 und der Prüfebene 13 liegt, eine erste Messzelle 6 angeordnet. Die erste Messzelle 6 ist am unteren Ende des Gehäuseeinsatzes 25 dem Messfeld 3 zugewandt angeordnet und misst die vom Messfeld 3 in einem rechten Winkel zur Prüfebene 13 remittierte elektromagnetische Strahlung. Bezogen auf die Hauptebene 23 entspricht dies einem Abstrahlungswinkel β von 0°. Die erste Messzelle 6 kann jedoch auch außermittig, beispielsweise in der in Fig. 1 dargestellten Position 6' oder 6" angeordnet sein, wobei sie dann die remittierte elektromagnetische Strahlung unter einem entsprechenden Abstrahlungswinkel β' bzw. β" messen würde. Gegebenenfalls können auch mehrere erste Messzellen 6, 6', 6" in der Messebene 27 verteilt angeordnet sein, etwa um die vom Messfeld 3 remittierte elektromagnetische Strahlung gleichzeitig unter mehreren unterschiedlichen Abstrahlungswinkeln β, β', β" zu messen.

Die erste Messzelle 6 ist vorzugsweise eine breitbandige und sehr empfindliche Messzelle, mit der die Intensität der von dem Messfeld 3 remittierten elektromagnetischen Strahlung in einem möglichst breiten Wellenlängen- und Intensitätsbereich gemessen werden kann. Als "breitbandig" kann in diesem Zusammenhang beispielsweise eine Photozelle mit einem Messbereich von ca. 250 bis ca. 1100 nm angesehen werden. Alternativ können auch mehrere Messzellen mit unterschiedlichen Messbereichen verwendet werden, oder es kann beispielsweise auch Photozellenarray mit einer MHz-Abtastung verwendet werden.

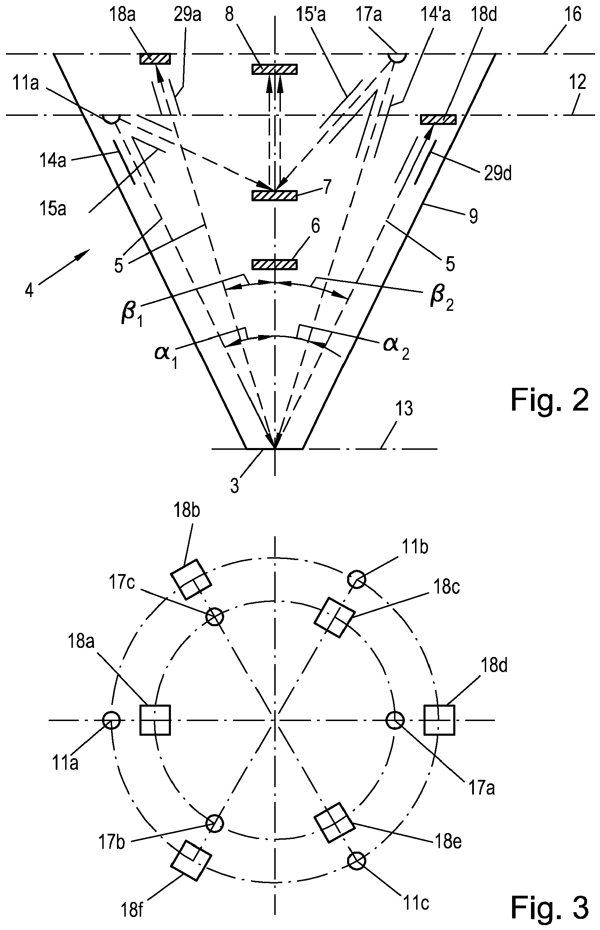

Eine Messung der Wellenlänge ist für viele Anwendungen nicht erforderlich, insbesondere da die Wellenlänge ja aufgrund des jeweils aktivierten Strahlungsgebers 11 im Allgemeinen in einem relativ schmalen Wellenlängenbereich jeweils vorgegeben und bekannt ist. Es ist jedoch auch möglich, die erste Messzelle 6 als ein Messfeld bzw. ein Photozellenarray mit einer Vielzahl von Einzelzellen, beispielsweise schmalbandige Empfangsdioden, auszuführen, die jeweils einen bestimmten Wellenlängenbereich messen. Eine Messung der Wellenlängen kann beispielsweise auch erfolgen, indem als Messzelle 6 ein Minispektrometer verwendet wird. Eine wellenlängenabhängige Messung kann beispielsweise zur Messung von Fluoreszenzeffekten, die gegebenenfalls in anderen Wellenlängenbereichen auftreten, als die diese Fluoreszenzeffekte anregende elektromagnetische Strahlung, vorteilhaft verwendet werden. Auch die untenstehend unter Bezugnahme auf die Fig. 2 und 3 beschriebenen Ausführungsformen können derartige Messungen unterschiedlicher Wellenlängenbereiche und/oder Winkelkombinationen ermöglichen.

Im oberen Bereich des Gehäuseeinsatzes 25 ist mittig eine von dem Hohlraum 24 räumlich getrennte Kalibrierkammer 28 angeordnet, wobei ausgehend von der Kalibrierkammer 24 Sekundärgänge 15 zu jedem Strahlungsgeber 11 angeordnet sind, über die ein Teil der von dem Strahlungsgeber 11 abgegebenen elektromagnetischen Strahlung direkt in die Kalibrierkammer 28 und auf eine darin angeordnete Referenzfläche 7 gerichtet wird. Die Referenzfläche 7 besteht aus einem einen Weißabgleich ermöglichenden Material, vorzugsweise einem Farbstandard, wie etwa einem herkömmlichen Weißstandard aus Bariumsulfat. Der Referenzfläche 7 ist gegenüberliegend eine zweite Messzelle 8 angeordnet, die die Intensität der von der Referenzfläche 7 remittierten elektromagnetischen Strahlung misst. Mithilfe dieser Intensitätsmessung können Intensitätsabweichungen der Strahlungsgeber 11 ermittelt und das Messergebnis der ersten Messzelle über eine einfache Kalibrierungsfunktion entsprechend korrigiert werden. Die Sekundärgänge 15 sind hinsichtlich ihrer Länge, ihres Querschnitts und Ihrer Ausrichtung derart angeordnet, dass das von dem Messfeld 3 remittierte Licht die von der zweiten Messzelle 8 vorgenommene Messung nicht oder nur unwesentliche, d.h. innerhalb der vorgegebenen Toleranzen, verfälschen kann. Gegebenenfalls ist es auch möglich, mehrere unterschiedliche Referenzflächen 7 in der Kalibierkammer 28 anzuordnen, und/oder das von diesen Referenzflächen 7 remittierte Licht mit mehreren zweiten (z.B. schmalbandigen) Messzellen 8 zu messen.

Die einzelnen Strahlungsgeber 11a-11l weisen jeweils unterschiedliche Eigenschaften auf, wobei sie sich insbesondere hinsichtlich ihrer Wellenlängen bereiche λ jeweils voneinander unterscheiden. Bei der Auswahl der Strahlungsgeber (im Allgemeinen werden zu diesem Zweck LEDs verwendet, es könnten jedoch auch andere Strahlungsquellen verwendet werden) ist auch auf den Abstrahlungswinkel zu achten. Dieser Abstrahlungswinkel muss ausreichend groß sein, um die elektromagnetische Strahlung in ausreichender Intensität sowohl über den jeweiligen Strahlengang 14 auf das Messfeld 3, als auch über den jeweiligen Sekundärgang 15 auf die Referenzfläche 7 zu richten. Eine weitere zu berücksichtigende Eigenschaft der Strahlungsgeber 11 ist die Temperaturstabilität, die in einem ausreichenden Maß gegeben sein muss, sodass temperaturbedingte Abweichungen der Intensität und/oder der Wellenlänge durch die Kalibrierung ausreichend gut ausgeglichen werden können. Zur Verbesserung der Temperaturstabilität kann für die Strahlungsgeber 11 beispielsweise auch eine aktive Temperaturkonditionierung vorgesehen werden, beispielsweise über Konditionierelemente 22, über die die Strahlungsgeber 11 sowohl gekühlt, als auch erwärmt werden können, um sie in einem optimalen Betriebsbereich zu halten. Als Konditionierelemente 22 eigenen sich insbesondere Peltierelemente.

Die Steuerungselektronik 19 ist in Fig. 1 in den Gehäusedeckel 26 integriert, wobei dies aufgrund der Nähe zu den Strahlungsgebern 11, den Konditionierelementen 22 und der zweiten Messzelle 8, sowie der Kühlung vorteilhaft ist und auch die Herstellung und den Zusammenbau erleichtert. Die Steuerungselektronik 19 kann jedoch auch an einer anderen Stelle angeordnet werden, beispielsweise im Gehäuseeinsatz 25 oder in einem (nicht dargestellten) Griffelement.

Die Steuerungselektronik 19 weist ein Sicherheitsmodul 20 auf, in dem sensible Daten gegen ein Auslesen besonders geschützt gespeichert sind. Diese geschützten Daten können sowohl bestimmte Angaben über Prüfgegenstände 1 und deren Merkmalskombinationen, als auch Angaben über die Art und Weise der optischen Anregung und Messung, Referenzbereiche für die Messungen oder andere sensible Daten enthalten, die für die Messungen relevant sind. Das Sicherheitsmodul 20 kann zu diesem Zweck hardwarecodiert, also in eine bestimmte Chiparchitektur integriert sein, oder es kann eine softwaretechnische Verschlüsselung aufweisen.

An der Außenseite des Gehäusedeckels ist eine Benutzerschnittstelle 21 angeordnet. Die Benutzerschnittstelle 21 kann beispielsweise ein herkömmliches Display mit Steuertasten oder einen Touchscreen umfassen, oder sie kann weniger komplex ausgeführt sein, etwa als Leuchtdiodenanordnung, über die ein Ergebnis signalisiert wird (z. B. Rot für ein negatives, Grün für ein positives Ergebnis), oder auch als akustischer Signalgeber, der das Messergebnis akustisch ausgibt (z.B. Brummen für ein negatives, Glockenton für ein positives Ergebnis).

Fig. 2 und 3 zeigen weitere alternative Merkmale, mit denen die Anzahl der möglichen Anstrahlungskombinationen und Winkelkombinationen erheblich erhöht werden können.

Fig. 2 zeigt eine schematisierte Darstellung einer Messvorrichtung 4, wobei lediglich die Konturen des Gehäuses 9 und des Messfelds 3 und die die Anordnung von Strahlungsgebern und Messzellen dargestellt sind. Auf eine detaillierte Darstellung der restlichen Elemente der Messvorrichtung, insbesondere des Gehäuseeinsatzes und des Gehäusedeckels, wurde der Übersichtlichkeit halber verzichtet.

Die in Fig. 3 dargestellte Messvorrichtung 4 weist eine erste Emissionsebene 12 und zusätzlich eine zweite Emissionsebene 16 auf, die sich bezogen auf die in Fig. 2 unten angeordnete Prüfebene 13 oberhalb der ersten Emissionsebene 12 befindet. Fig. 3 zeigt die in der ersten Emissionsebene 12 und der zweiten Emissionsebene 16 angeordneten Elemente in einer Draufsicht.

In der ersten Emissionsebene 12 sind eine Vielzahl an ersten Strahlungsgebern 11 angeordnet, wobei in Fig. 3 lediglich drei Strahlungsgeber 11a bis 11c dargestellt sind. Zusätzlich dazu sind in der zweiten Emissionsebene 16 drei weitere Strahlungsgeber 17a bis 17c angeordnet, wobei die weiteren Strahlungsgeber 17 der zweiten Emissionsebene 16 gegenüber den Strahlungsgebern 11 der ersten Emissionsebene 12 um 60 Grad versetzt sind. Zusätzlich zu den Strahlungsgebern sind in der ersten Emissionsebene 12 und der zweiten Emissionsebene 16 jeweils drei Zusatzmesszellen 18a bis 18f angeordnet.

In jeder Emissionsebene ist jedem Strahlungsgeber 11, 17 jeweils ein Strahlengang 14 und eine Sekundärgang 15 zugeordnet. Wie dies in Fig. 2 schematisiert dargestellt ist, ist weiters für jede Zusatzmesszelle 18 ein Messgang 29 vorgesehen, der eine Messung der von der Messebene 3 abgestrahlten elektromagnetischen Strahlung 5 unter einem bestimmten Abstrahlungswinkel β ermöglicht. Dadurch ist es möglich, Einzelmessungen unter einer Vielzahl an unterschiedlichen Winkel- und/oder Wellenlängenkombinationen durchzuführen. In dem in Fig. 2 dargestellten Beispiel kann etwa die in der zweiten Emissionsebene 16 angeordnete Zusatzmesszelle 18a die von einem beliebigen Strahlungsgeber 11a bis 11c oder einem weiteren Strahlungsgeber 17a bis 17c ausgestrahlte und von der Messebene 3 remittierte elektromagnetische Strahlung 5 unter einem Abstrahlungswinkel β₁ messen. Die in der ersten Emissionsebene 12 angeordnete Zusatzmesszelle 18d misst die Strahlung unter einem Abstrahlungswinkel β₂, der sich sowohl im Betrag, als auch in der Ausrichtung von dem Abstrahlungswinkel β₁ unterscheidet. Somit kann beispielsweise das von dem Strahlungsgeber 11a unter dem Einstrahlungswinkel α₁ auf die Messebene 3 auftreffende Licht entweder von der Zusatzmesszelle 18a mit der sehr kleinen Winkelkombination (α₁+β₁), und/oder von der Zusatzmesszelle 18d unter der sehr großen Winkelkombination (α₁+β₂) gemessen werden. Die Probenoberfläche 2 kann daher selektiv auf Einzelmerkmale untersucht werden, die sich nur unter einem sehr bestimmten Winkel erkennen lassen.

Weiterhin ist es möglich, die remittierte elektromagnetische Strahlung 5 mit der ersten Messzelle 6 zu messen.

Einzelne der Zusatzmesszellen und/oder auch erste(n) Messzelle(n) können einen schmalbandigen Messbereich aufweisen, sodass sie elektromagnetische Strahlung nur in einem eng definierten Wellenlängenbereich messen. Dadurch ist es beispielsweise möglich, die Messfläche 3 mit mehreren Strahlungsgebern gleichzeitig von jeweils unterschiedlicher Richtung mit elektromagnetischer Strahlung mit jeweils unterschiedlicher Wellenlänge anzustrahlen, und nur den Wellenlängenbereich zu berücksichtigen, der unter einem bestimmten Abstrahlungswinkel β remittiert wird. Dies macht es unmöglich, durch reine Beobachtung und Analyse des Messvorgangs das Einzelmerkmal herauszufinden, das gerade gemessen wird.

Die Darstellung der Fig. 2 und 3 sind rein beispielhaft und dienen der Veranschaulichung der Erfindung. Der Fachmann ist ohne weiteres in der Lage, in Abhängigkeit von den jeweiligen Anforderungen zahlreiche andere Anordnungsvarianten zu wählen. Beispielsweise ist die Anzahl an Strahlungsgebern 11, 17 und Zusatzmesszellen 18 lediglich durch den jeweils vorhandenen Platz und deren Baugröße beschränkt. Auch der Anteil an Zusatzmesszellen 18 bzw. Strahlungsgebern 11, 17 kann in jeder Ebene zwischen 0 und 100% beliebig gewählt werden, solange insgesamt ausreichend viele Strahlungsgeber 11, 17 vorhanden sind. Auch müssen die Strahlungsgeber und/oder Zusatzmesszellen in jeder Emissionsebene nicht unbedingt kreisförmig angeordnet sein, sondern sie können jede beliebige Anordnung aufweisen, etwa elliptisch, in einem Rechteck, in einer asymmetrischen Anordnung oder in einer beliebigen anderen regelmäßigen oder unregelmäßigen Form. Dies kann beispielsweise dazu verwendet werden, um die Anzahl an Einstrahlungswinkeln α und messbaren Abstrahlungswinkeln β zu erhöhen. Selbstverständlich können auch mehr als zwei Emissionsebenen übereinander angeordnet werden, wobei konstruktiv dann darauf zu achten ist, dass für jeden Strahlungsgeber in jeder Ebene ein Strahlengang 14 und, wenn für diesen Strahlungsgeber eine Kalibrierungsfunktion vorgesehen sein soll, auch ein Sekundärgang 15 vorhanden ist, und dass für jede Zusatzmesszelle 18 ein Messgang 29 vorgesehen ist. Gegebenenfalls können Messgänge 29 und/oder Strahlengänge 14 auch kombiniert werden, etwa wenn mehrere direkt beieinander angeordnete einen Strahlengang 14 gemeinsam nutzen, oder wenn ein Strahlungsgeber 11, 17 und eine Zusatzmesszelle 18 direkt beieinander angeordnet oder zu einer Einheit kombiniert sind. Auch können sich Messgänge 29 und/der Strahlengänge 14 und/oder Sekundärgänge 15 jeweils überschneiden, wenn dies die grundsätzliche Funktionalität nicht wesentlich einschränkt. Auch ist es möglich, die Messebene(n), die Emissionsebene(n) und/oder die Prüfebene jeweils unter einem bestimmten Winkel zueinander anzuordnen. Hinsichtlich der in dieser Anmeldung verwendeten Begriffe "Winkel", "Winkelbereich", "Wellenlänge" und "Wellenlängenbereich" ist darauf hinzuweisen, dass jeder Winkelbereich und jeder Wellenlängenbereich auch als Winkel bzw. Wellenlänge mit einem bestimmten Toleranzbereich beschrieben werden kann. Als Winkel bzw. Wellenlänge ist somit immer auch ein Winkelbereich bzw. ein Wellenlängenbereich anzusehen, oder umgekehrt.

Um eine Messung mit der erfindungsgemäßen Messvorrichtung 4 durchzuführen, kann die Messöffnung 10 entweder stabil auf die Probenoberfläche 2 aufgesetzt werden, wobei die Form der Messöffnung 10 sicherstellt, dass die Messvorrichtung exakt, d.h. im Allgemeinen unter einem Winkel von 90°, auf die Probenoberfläche 2 ausgerichtet ist. Eine genaue Ausrichtung ist insbesondere für die Messung winkelabhängiger Remissionsvorgänge wichtig.

Die Messöffnung 10 kann jedoch auch eine Führung (nicht dargestellt) aufweisen, entlang derer sich die Messvorrichtung 4 (bzw. deren Messöffnung 10) unter Einhaltung eines definierten Winkels entlangführen lässt. Die Führung kann dann an dem Prüfgegenstand 1 angeordnet und festgehalten (oder auch auf andere Weise befestigt) werden, und die Messöffnung 10 wird dann entlang der Führung geführt über die zu messende Probenoberfläche 2 bewegt. Dadurch lässt sich beispielsweise eine bestimmte Abfolge an Prüfpunkten messen, die zum Beispiel in Form eines Barcodes auf einer Verpackung angebracht sein könnten. Gleichzeitig mit oder anstelle der Lesung und Auswertung des Barcodes können bestimmte, in einzelne der Barcodebereiche eingebrachte Einzelmerkmale gemessen und ausgewertet werden. Aufgrund des einfachen Aufbaus und der in die Messvorrichtung 4 integrierten Kalibrierfunktion kann die Zykluszeit für einen Messdurchlauf sehr schnell (also beispielsweise im Bereich weniger, z.B. 1-10 Millisekunden) durchgeführt werden, sodass auch bei einer zügigen Bewegung des Messkopfs alle Einzelmerkmale gemessen werden können.

Die Prüfpunkte bzw. die einzelnen Balken des Barcodes können dabei für den Betrachter entweder dasselbe optische Erscheinungsbild aufweisen, wobei sie aber unterschiedliche optische Einzelmerkmale integriert haben, oder sie können für den Betrachter eine unterschiedliche Farbgestaltung aufweisen, wobei sie dennoch alle zumindest ein identisches Einzelmerkmal aufweisen, oder diese beiden Möglichkeiten können kombiniert verwendet werden.

Ein praktisches Beispiel für die Erzeugung von winkelabhängigen Einzelmerkmalen ist die Verwendung von Interferenzpigmenten, wie sie beispielsweise für die Herstellung optisch variabler Farben (bzw. "Optical Variable Inks" - OVI) verwendet werden. Solche Interferenzpigmente und deren Anwendung sind im Stand der Technik an sich bekannt. Erfindungsgemäß können am Markt verfügbare Interferenzpigmente verwendet werden, bei größeren Volumina und höheren Sicherheitsanforderungen können jedoch auch Interferenzpigmente spezifisch für den gewünschten Zweck hergestellt werden. Aufgrund der technischen Komplexität sind nur wenige Anbieter in der Lage, Interferenzpigmente entwickeln und herstellen zu können, und die Verwendung spezifischer Interferenzpigmente, die nicht am Markt frei erhältlich sind, erlaubt eine hohe Fälschungssicherheit. Interferenzpigmente haben eine große Abhängigkeit der remittierten Intensität vom Winkel und von der Wellenlänge, und die spektrale Intensitätsverteilung kann zusätzlich über die Bindemittel-Matrix zusätzlich beeinflusst werden um bestimmte auswertbare Einzelmerkmale zu erzeugen.

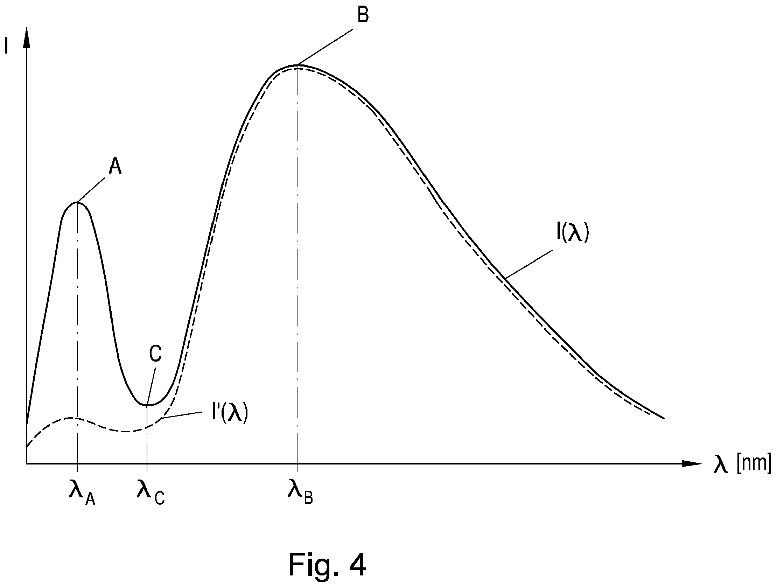

Das Verhalten von solchen mit Interferenzpigmenten versehenen Probenoberflächen wird unter Bezugnahme auf Fig. 4 anhand eines Beispiels erläutert. Fig. 4 zeigt den Verlauf der unter einem bestimmten Abstrahlungswinkel β gemessenen Intensität I einer unter einem bestimmten Einstrahlungswinkel α mit Licht angestrahlten Prüfoberfläche, die mit einem Interferenzpigment versehen ist. Der Intensitätsverlauf I(λ) (durchgezogene Linie) zeigt zwei Wertspitzen A und B bei einer Lichtwellenlänge λ_{A} (erste Wertspitze A) bzw. λ_{B} (zweite Wertspitze B) und ein lokales Wertminimum C bei λ_{C}. Sowohl die Wertspitzen A, B, als auch das Wertminimum C können als mess- und auswertbare Einzelmerkmale herangezogen werden.

Die erste Wertspitze A kann dabei beispielsweise außerhalb des sichtbaren Lichts im ultravioletten Bereich liegen. In einer alternativen Ausführungsform kann daher diese erste Wertspitze A durch Zugabe von Mitteln, die die Lichtreflexion in diesem Bereich verringern, (etwa UV-Blocker) "ausgelöscht" werden, ohne dass sich die sichtbare Farbe wesentlich in der zu erwarteten Toleranz verändert. Ein solcher alternativer Intensitätsverlauf I'(λ) ist in gestrichelter Linie dargestellt. Eine Fälschung, die dasselbe Interferenzpigment verwendet, aber den Zusatz nicht enthält, wird von der Messvorrichtung erkannt. Ein Fälscher muss daher auch genau wissen, auf welche Einzelmerkmale der Prüfgegenstand geprüft wird, um das Produkt fälschen zu können.

Auch Lichtremissionseigenschaften im Infrarotbereich lassen sich erfindungsgemäß einsetzen, etwa durch Verwendung von Farben, die im sichtbaren Bereich schwarz sind, aber im IR-Bereich ein starkes Reflexionsvermögen aufweisen.

Durch eine Kombination mehrerer solcher Einzelmerkmale, die sich teilweise überschneiden können, lassen sich auf einfache Weise sehr komplexe Sicherheitsmerkmale erstellen. Die Sicherheitsmerkmale können beispielsweise in Farbmittel, z.B. Lacke oder Druckfarben, eingebracht und als solche vertrieben werden. Der Benutzer der Druckfarbe kann diese zur Kennzeichnung seiner Waren verwenden, ohne Kenntnisse über die Einzelmerkmale zu haben.

Die obenstehend beschriebene Erfindung umfasst somit drei wesentliche Aspekte, die in symbiotischer Weise zusammenwirken: Den Farbstoff (insbesondere ein Lack oder eine Druckfarbe), der die Einzelmerkmale der Prüfeigenschaften verwirklicht, das spezifische Verfahren (gegebenenfalls auch mehrere alternative Verfahren), mit dem die Prüfeigenschaft gemessen werden kann, und die Messvorrichtung, die das Verfahren ausführen kann.

### Bezugszeichenliste:

Prüfgegenstand 1
Probenoberfläche 2
Messfeld 3
Messvorrichtung 4
elektromagnetische Strahlung 5
erste Messzelle 6
Referenzfläche 7
zweite Messzelle 8
Gehäuse 9
Messöffnung 10
Strahlungsgeber 11
erste Emissionsebene 12
Prüfebene 13
Strahlengang 14
Sekundärgang 15
zweite Emissionsebene 16
weitere Strahlungsgeber 17
Zusatzmesszelle 18
Steuerungselektronik 19
Sicherheitsmodul 20
Benutzerschnittstelle 21
Konditionierelement 22
Hauptachse 23
Hohlraum 24
Gehäuseeinsatz 25
Gehäusedeckel 26
Messebene 27
Kalibrierkammer 28
Messgang 29
Einstrahlungswinkel α
Abstrahlungswinkel β
Wellenlänge λ

## Patentansprüche

1. Verfahren zur Ermittlung zumindest einer Prüfeigenschaft eines Prüfgegenstands (1), wobei eine Probenoberfläche (2) des Prüfgegenstands (1) an einem Messfeld (3) einer Messvorrichtung (4) angeordnet wird, welche geeignet ist, das Messfeld (3) unter einer Vielzahl an Anstrahlungskombinationen aus Einstrahlungswinkel (α) und/oder Wellenlängenbereich (λ) mit elektromagnetischer Strahlung (5) anzustrahlen und die Intensität von jeweils von dem Messfeld unter zumindest einem Abstrahlungswinkel (β) remittierter elektromagnetischer Strahlung (5) zu messen, **dadurch gekennzeichnet, dass** die Prüfeigenschaft zumindest ein definiertes messbares Einzelmerkmal aufweist, wobei das Einzelmerkmal oder eine definierte Merkmalskombination mehrerer solcher Einzelmerkmale die Herkunft und/oder Identität des Prüfgegenstandes (1) belegt, wobei das Einzelmerkmal oder die Merkmalskombination messbar ist, wenn sie durch die elektromagnetische Strahlung (5) auf eine durch eine Auswahl an Anstrahlungkombinationen definierte Art und Weise optisch angeregt wird, und wobei das Einzelmerkmal oder die Merkmalskombination mit der Messvorrichtung (4) in dieser Art und Weise angeregt und gemessen wird.

2. Verfahren nach Anspruch 1, **dadurch gekennzeichnet, dass** das Verfahren die folgenden Schritte ausführt:
- Ausführen einer für die zu messende Prüfeigenschaft des Prüfgegenstandes (1) definierten Abfolge von Einzelmessungen für jedes Einzelmerkmal, wobei jede Einzelmessung zumindest ein
∘ Anstrahlen der Probenoberfläche (2) im Messfeld (3) mit elektromagnetischer Strahlung (5) unter einem definierten Einstrahlungswinkel (α) und einem definierten Wellenlängenbereich (λ); und ein
∘ Messen der von der Probenoberfläche (2) unter zumindest einem definierten Abstrahlungswinkel (β) remittierten elektromagnetischen Strahlung (5)
umfasst;
- Vergleichen der Messwerte mit für die Abfolge von Einzelmessungen definierten Referenzbereichen; und
∘ Ermitteln, dass der Prüfgegenstand (1) die Prüfeigenschaft aufweist, wenn eine vorbestimmte Teilmenge der Messwerte innerhalb der definierten Referenzbereiche liegen oder
∘ Ermitteln, dass der Prüfgegenstand (1) die Prüfeigenschaft nicht aufweist, wenn eine vorbestimmte Teilmenge der Messwerte außerhalb der definierten Referenzbereiche liegen.

3. Verfahren nach Anspruch 1 oder 2, **dadurch gekennzeichnet, dass** zumindest ein Einzelmerkmal von der Farbe der Probenoberfläche (2) zumindest teilweise unabhängig ist und/oder durch eine dem Prüfungsgegenstand (1) zugemischte Materialkomponente bestimmt ist, die vorzugsweise die sichtbare Farbe der Probenoberfläche (2) nicht wahrnehmbar verändert.

4. Verfahren nach einem der Ansprüche 1 bis 3, **dadurch gekennzeichnet, dass** zumindest ein Einzelmerkmal eine winkelabhängige optische Eigenschaft der Probenoberfläche (2) umfasst, und/oder dass während zumindest einer Einzelmessung die von der Probenoberfläche (2) remittierte elektromagnetische Strahlung (5) unter zumindest zwei unterschiedlichen Abstrahlungswinkeln (β) gemessen wird.

5. Verfahren nach einem der Ansprüche 1 bis 4, **dadurch gekennzeichnet, dass** zumindest ein Einzelmerkmal zumindest ein Abklingverhalten einer von der elektromagnetischen Strahlung (5) bewirkten Fluoreszenz des Prüfgegenstandes (1) umfasst.

6. Verfahren nach einem der Ansprüche 1 bis 5, **dadurch gekennzeichnet, dass** zumindest ein Einzelmerkmal durch eine im Prüfungsgegenstand (1) notwendiger Weise vorhandene Substanz, insbesondere eine pharmazeutische Wirksubstanz, bestimmt ist.

7. Verfahren nach einem der Ansprüche 1 bis 6, **dadurch gekennzeichnet, dass** zumindest eine Einzelmessung einen Wellenlängenbereich (λ) im nicht sichtbaren Lichtspektrum nutzt.

8. Verfahren nach einem der Ansprüche 1 bis 7, **dadurch gekennzeichnet, dass** die für den Prüfgegenstand (1) definierte Abfolge von Einzelmessungen und/oder Referenzbereichen in der Messvorrichtung (4) gegen ein Auslesen gesichert, insbesondere datentechnisch oder hardwaretechnisch verschlüsselt gespeichert ist.

9. Verfahren nach einem der Ansprüche 1 bis 8, **dadurch gekennzeichnet, dass** die für die Einzelmessung ausgestrahlte elektromagnetische Strahlung gleichzeitig auf eine in der Messvorrichtung (4) angeordneten Referenzfläche (7) gerichtet, und von dieser Referenzfläche (7) remittierte elektromagnetische Strahlung mit einer zweiten Messzelle (7) gemessen und der eigentliche Messwert mithilfe dieser zweiten Messung kalibriert wird.

10. Messvorrichtung (4), insbesondere zur Ausführung eines Verfahrens gemäß einem der Ansprüche 1 bis 11, mit einem lichtabdichtenden Gehäuse (9), wobei das Gehäuse (9) eine Messöffnung (10) aufweist, welche bei der Messung an eine Probenoberfläche (2) eines Prüfgegenstands (1) angehalten wird und auf dieser ein Messfeld (3) in einer Prüfebene (13) definiert, zumindest einem Strahlungsgeber (11), der elektromagnetische Strahlung in einem definierten Wellenlängenbereich (λ) über einen Strahlengang (14) unter einem definierten Einstrahlungswinkel (α) auf das Messfeld (3) richtet, und zumindest einer ersten Messzelle (6) zur Messung der Intensität von unter einem Abstrahlungswinkel (β) von dem Messfeld (3) remittierter elektromagnetischer Strahlung (5), **dadurch gekennzeichnet, dass** die Messvorrichtung (4) zumindest einen Sekundärgang (15) aufweist, über den von dem Strahlungsgeber (11) abgegebene elektromagnetische Strahlung (5) gleichzeitig auf eine Referenzfläche (7) gerichtet wird, wobei eine zweite Messzelle (8) vorgesehen ist, die von der Referenzfläche (7) remittierte elektromagnetische Strahlung (5) misst.

11. Messvorrichtung (4) nach Anspruch 10, **dadurch gekennzeichnet, dass** zumindest ein Konditionierelement (22), insbesondere ein Peltierelement, zur Konditionierung der Betriebstemperatur von zumindest einem Strahlungsgeber (11) vorgesehen ist.

12. Messvorrichtung (4) nach Anspruch 10 oder 11, **dadurch gekennzeichnet, dass** eine Vielzahl an Strahlungsgebern (11) in einer ersten Emissionsebene (12) angeordnet ist wobei gegebenenfalls eine Vielzahl weiterer Strahlungsgeber (17) in einer zweiten Emissionsebene (16) und gegebenenfalls in noch weiteren Emissionsebenen angeordnet ist.

13. Messvorrichtung (4) nach Anspruch 12, **dadurch gekennzeichnet, dass** in einer Emissionsebene (12, 16) zumindest eine Zusatzmesszelle (18) angeordnet ist.

14. Messvorrichtung (4) nach einem der Ansprüche 10 bis 13, **dadurch gekennzeichnet, dass** die Messvorrichtung (4) eine Steuerungselektronik (19) aufweist, die ausgebildet ist, um zumindest einen Teil der in der Messvorrichtung (4) vorgesehenen Strahlungsgeber (11, 17) gemäß einer für eine zu messende Prüfeigenschaft des Prüfgegenstandes (1) definierte Abfolge von Messungen selektiv zu aktivieren und remittierte elektrische Strahlung mit zumindest einem Teil der ersten Messzelle (6) und gegebenenfalls der Zusatzmesszellen (18) gemäß der definierten Abfolge von Messungen zu messen, wobei die Steuerungselektronik (19) vorzugsweise ausgebildet ist, um zu ermitteln, ob eine vorbestimmte Teilmenge der Messwerte der Abfolge von Messungen innerhalb von definierten Referenzbereichen liegt.

15. Messvorrichtung (4) nach Anspruch 14, **dadurch gekennzeichnet, dass** die Steuerungselektronik (19) eine Benutzerschnittstelle (21) zum Anzeigen eines Prüfergebnisses aufweist, wobei die Benutzerschnittstelle (21) vorzugsweise eine Display zur optischen Anzeige und/oder einen Signalgeber zur akustischen Anzeige des Prüfergebnisses aufweist, und wobei die Steuerungselektronik (19) gegebenenfalls ein Sicherheitsmodul (20) aufweist.
